# EUROPEAN PATENT SPECIFICATION

(11) **EP 2 035 741 B1**
(45) Date of publication and mention of the grant of the patent: **03.03.2010**
(21) Application number: 07835888.4
(22) Date of filing: 26.06.2007
(51) Int. Cl.: F17C 13/04

(54) **LOW RELEASE RATE CYLINDER PACKAGE**
ZYLINDERPAKET MIT GERINGER FREISETZUNGSRATE
CONDITIONNEMENT CYLINDRIQUE AVEC UNE FAIBLE VITESSE DE LIBÉRATION

(30) Priority: 30.06.2006 US 477906
(43) Date of publication of application: 18.03.2009
(73) Proprietor: PRAXAIR TECHNOLOGY, INC., Danbury, CT 06810-5113 (US)
(72) Inventor: WAGNER, Matthew, Lincoln, Buffalo, NY 14222 (US); HEIDERMAN, Douglas, Charles, Akron, NY 14001 (US)
(74) Representative: Schwan - Schwan - Schorer
(86) International application number: PCT/US2007/014814
(87) International publication number: WO 2008/016441

(56) References cited:
- EP-A- 1 515 080
- WO-A-2004/065750
- GB-A- 829 967
- US-A- 4 793 379
- US-A- 6 012 474
- US-A- 6 045 115
- US-A- 6 089 027
- US-A1- 2003 192 430
- US-A1- 2004 112 435

## Description

### Field of the Invention

The present invention relates to high pressure cylinder packages utilized in the delivery of highly toxic and/or flammable compounds to semiconductor manufacturing tools.

### Description of Related Art

Industrial processing and manufacturing applications such as the semiconductor manufacturing requires the safe storage and handling of highly toxic or flammable hydridic and halidic gases. The semiconductor industry in particular relies on the gaseous hydrides of silane (SiH4), and liquefied compressed gases such as arsine (AsH₃) and phosphine (PH₃) for wafer processing. Various semiconductor process systems typically use SiH₄, AsH₃ and PH₃ at pressures as high as 104.4 bar (1,500 psig). Due to their extreme toxicity and high vapor pressure, uncontrolled release of the gas due to delivery system component failure, or human error during cylinder change-out procedures may lead to catastrophic results. For example, the release of a flammable gas such as silane may result in a fire, system damage and potential for personal injury. On the other hand, leaks of a highly toxic gas such as arsine may result in personal injury or even death.

With reference to silane handling as a more specific example of how an extremely toxic gas is used by the semiconductor industry, silane is typically stored in pressurized containers at about 17.2 bar (250 psi) or higher. The handling of cylinders in production environments presents a wide variety of hazardous situations. A leak in one 140 gram cylinder of silane could contaminate the entire volume of a 2787 m² (30,000 square foot) building with 3.05 m (10 foot) high ceilings to the Immediate Danger to Life and Health (IDLH) level. If the leak rate were large, this could happen in just a minute or two, which would mean that for many hours there would be extremely deadly concentration in the area near the source of the spill.

The standard high pressure cylinders for silane, and the like, typically have a capacity of 500 cm³ or more and include a valve outlet through which the gas is discharged at the point-of-use. Silane is filled at high pressure until the cylinder attains about 20% capacity. Once filled, the cylinder valve is closed and a safety cap is installed on the valve outlet port. The cylinders are subsequently delivered to the semiconductor fab where the end-user will, in a well ventilated area, remove the safety cap, install the container in a vertical position, attach the cylinder to a distribution manifold, purge and leak check the newly made connection, and open the cylinder valve. The cylinder then dispenses gaseous product.

In light of the hazards associated with the unintended release of these fluids from high pressure cylinders, a number of proposals have been made in the related art to prevent a catastrophic release of toxic/flammable fluids.

One such proposal has been the use of a restrictive flow orifice (RFO) installed in the outlet or the fluid flow path outside of the high pressure cylinder. At least two types of RFOs are currently available and in use. The first is a metal gasket RFO which contains a small diameter hole (about 0.010 inches or 254 µm diameter) bored through the center of a washer-like disk or gasket having a thickness of about 0.5 - 0.7mm. The second RFO design is a plug-type orifice that is threaded into the cylinder valve use port. This type of RFO, likewise has a similar size diameter hole, as the one described above. At high pressure (e.g., 104.4 bar (1,500 psig)) these RFOs are able to limit the maximum flow rate to thousands or tens of thousands of standard cubic centimeters per minute (sccm). However, this is generally an unacceptable high flow rate. For example, when silane is utilized, to obtain a release rate of approximately 21,500 sccm, the cylinder pressure must be lowered to 56.2 bar (800 psig). This lower fill pressure, in turn, severely limits the total capacity of each cylinder. This capacity limitation requires more frequent cylinder change-outs which in turn increases the risk for gas leak, exposure and/or a fire. The semiconductor consortia, known as SEMATECH (Semiconductor Manufacturing Technology) estimates that approximately 35% of gas related incidents occur during cylinder exchange.

Other alternative systems have been proposed in U.S. Patent Nos. 6,089,027 and 6,343,976 Bl. In these systems, one or more set pressure regulators are disposed in series along the flow path of the gas which is in communication with the outlet of the cylinder. The regulators are utilized to step down the pressure to about 7.91 bar (100 psig) and reduce the flow rate at outlet of the cylinder. In addition, in the commercial embodiments known as VAC® and marketed by Advanced Technology Materials, Inc. a standard RFO, such as the ones discussed above, is employed to further reduce the maximum flow to about 5,000 sccm.

U.S. Patent Nos. 5,937,895, 6,007,609, 6,045,115, assigned to Praxair Technology, Inc., and which are incorporated by reference in their entirety, disclose high pressure cylinders having an on/off valve. The systems disclosed in these publication can only be opened by the end-user upon the application of a vacuum on the outlet (i.e., less than 1.01 bar (760 Torr)).

GB 829 967 A relates to an apparatus according to the preamble of claim 1, comprising a gas cylinder containing pressurized gas, such as carbon dioxide, which is provided with a shut-off valve into which a capillary flow restriction tube is integrated which is located downstream of the sealing element of the shut-off valve. No separate filling port is provided.

US 6,045,115 relates to an apparatus for discharging pressurized semiconductor dopant gas from a gas cylinder, which comprises a pressure regulator located upstream of the shut-off valve and a capillary tube located upstream of the pressure regulator.

The present invention provides several advantages over the related art, including a reduction in the flow rate of highly toxic and/or flammable gases when the outlet of the high pressure cylinder is exposed to atmospheric conditions, or otherwise functioning at super-atmospheric conditions.

Another object of the present invention is to provide an apparatus which does not require internal pressure regulators, check valves or restriction flow orifices, or other mechanically operated features, thereby reducing the costs and probability of malfunction associated with the high pressure cylinders and/or mechanical devices.

Another object of the present invention is to eliminate the potential errors related to the use of an external RFO. External RFOs have the potential to leak either around the sealing surface in the case of the gasket type or around the threads in the case of the insert type. Additionally, the operator may forget to install the RFO or may install the incorrect size RFO. During purge processes after attaching a cylinder or prior to cylinder removal it is critical to remove all of the air or product trapped between the RFO device and the cylinder valve seat. By design, the RFO is constructed to drastically limit the flow across the device during use but in the case of purging and evacuating the connection, this limitation severely limits the rate and efficiency of the purge/evacuation process thereby increasing the potential for a gas release and/or human exposure. By locating the flow reducing device to inside the cylinder or upstream of the cylinder isolation valve the errors listed above are eliminated.

A further object is to increase the amount of product available from the cylinder as compared to conventional high pressure silane gas cylinders. As discussed above, the current external RFO offerings cause the maximum fill pressure for silane to be limited, often to 56.2 bar (800 psig) maximum. On the other hand, the present invention allows the cylinder pressure to be increased to as high as 104.4 bar (1,500 psig) and the corresponding increased capacity translates into fewer cylinder changes, thereby improving both safety and productivity for the end-user.

Another object concerns ventilation. Required gas box or gas cabinet ventilation for compressed gases is typically based upon the worse case expected release rate for the package. The typical exhaust rate for a 56.2 bar (800 psig) silane cylinder with a 254 µm (0.010 inch) RFO is on the order of 300 to 350 CFM. The Compressed Gas Association publication G-13 - 2006 *Storage and Handling of Silane and Silane Mixtures,* section 13, describes the ventilation requirements for silane in various locations. Specifically, section 13.2.3.1.1 describes the calculations used to determine minimum ventilation rates. Based upon the referenced calculation the present invention could allow ventilation rates to be decreased from 300-350 CFM to 50-100 CFM, a three and a half to a six-fold decrease. Reduced ventilation rates correlate directly to reduced power consumption and equipment maintenance.

### SUMMARY OF THE INVENTION

According to the invention, an apparatus for controlling the discharge of pressurized fluids from the outlet of a high pressure cylinder containing toxic hydridic or flammable compounds as defined in claim 1 is provided. of pressure regulators, check valves and restrictive flow orifices; and the restricted flow path limits the flow rate of the gas discharged from the cylinder to 5,000 sccm when the outlet of the cylinder is exposed to an atmospheric condition.

In accordance with one aspect of the invention, the restrictive flow path comprises an excess flow valve which limits and/or stops the egress of fluid when a preset flow rate passing through the valve is exceeded. The preset flow rate is the maximum flow rate of the fluid passing through the device. For example the excess flow valve may be set to allow delivery of fluid flows from zero up to 5,000 sccm but if for any reason the flow rate through the device were to exceed 5,000 sccm (such as a component failure or leak downstream of the device) the excess flow valve would close and prevent any further release of fluid. In the event of a component failure or leak this device would prevent further escape of gas thereby retaining the remaining fluid inside the cylinder or storage vessel. This feature alone or in combination with the capillary flow restrictor greatly enhance the safety, environmental and health features of the cylinder package.

### BRIEF DESCRIPTION OF THE FIGURES

The objects and advantages of the invention will be better understood from the following detailed description of the preferred embodiments thereof in connection with the accompanying figures wherein like numbers denote same features throughout and wherein:

Fig. 1 illustrates a schematic cross-sectional view of an apparatus for controlling the discharge of pressurized fluids from the outlet of a high pressure cylinder;

Fig. 2 illustrates a cross-sectional view of the capillary flow restrictor;

Fig. 3 illustrates a schematic diagram of the apparatus of the present invention connected to a semiconductor tool; and

Fig. 4 is an illustration of a schematic cross-sectional view of an apparatus for controlling the discharge of pressurized fluids from the outlet of a high pressure cylinder having an excess flow valve therein.

### DETAILED DESCRIPTION OF THE INVENTION

The manufacture of semiconductor devices requires a number of processing steps including, for example, the doping of certain substrates which affect the electrical conductance of the devices, epitaxial growth, or metalorganic chemical vapor deposition. Generally, highly toxic or flammable hydridic and halidic fluids are stored and dispensed to these semiconductor manufacturing tools in gaseous phase. For purposes of explanation this invention will be described in the context of silane gas. However, it will be understood by those skilled in the art that other toxic hydridic or halidic gases such as arsine, phosphine and diborane may be utilized.

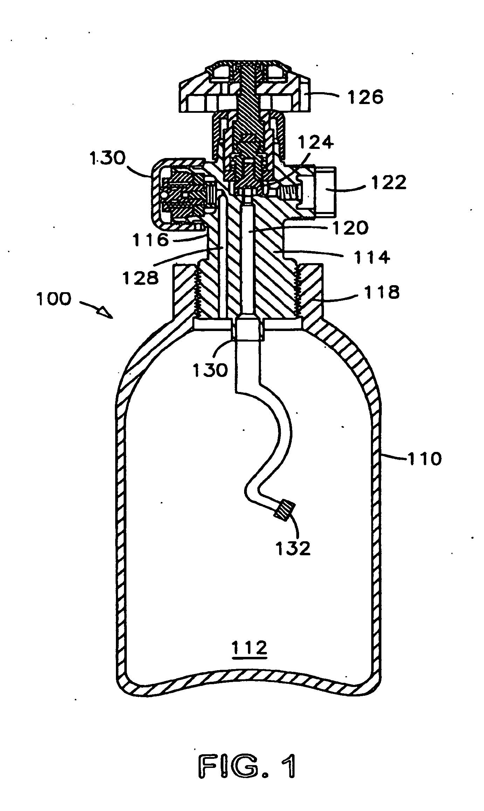

With reference to Fig. 1, an apparatus 100 for controlling the discharge of pressurized fluids, in accordance with an illustrative embodiment of the invention is described. The apparatus 100 includes a fluid storage and dispensing cylinder 110, defining and circumscribing an interior volume 112, as shown.

At the neck of the vessel, a cylinder port body 114 including a dual-port valve head assembly 116 is threadably engaged with the interior threaded opening of collar 118. The dual-port valve head assembly 116 includes a fluid flow discharge passage 120 joined in fluid flow communication with a central working volume cavity in the valve head assembly. The central working volume cavity is in turn in communication to outlet port 122, which may be exteriorly threaded or otherwise constructed for attachment of a connector and associated piping, conduit, etc. thereto.

Disposed in the central working volume cavity is a valve element 124 that is joined to a hand wheel 126 in the embodiment shown, but may alternatively be joined to an automatic valve actuator or other controller, such as a pneumatic or electronic actuating means.

The valve head assembly 116 also features in the valve block a fill passage 128 communicating with fill valve 130 (and port, not shown but located 3-dimensionally behind the valve body) and the interior volume 112 of the vessel. The vessel 110 may thereby be charged with pressurized gas, following which the fill port is closed and capped. These type of dual-port valves are commercially available from the Ceodeux Ultra Pure Equipment Company located in Luxembourg.

The central fluid flow discharge passage 120 in the valve head assembly 114 is joined at its lower end to a restrictive flow path 130 including a filter 132 located at the inlet of the restrictive flow path. The inlet is disposed in the gas space and in the case of liquefied compressed gases, above the liquid fluid maintained in cylinder 110. The use of the restrictive flow path 130 increases safety in the event the valve head assembly 114 is sheared off, or otherwise the outlet of the high cylinder pressure is opened to an atmospheric condition. In particular, the preferred structure of the restrictive flow path is uniformly sized capillaries which offer flexibility and reliability. The capillaries of the restrictive flow path limits the flow rate of the gas discharge from the cylinder to not more than 5,000 sccm. However, neither the restrictive flow path nor the apparatus taken as a whole, includes a restrictive element selected from the group of pressure regulators, check valves or restrictive flow orifices.

Specifically, and with reference to Fig. 1, a conduit defines at least two capillary passages, wherein the internal diameter of the capillaries will be on the order of about 126 micrometers or less. For two capillary passages, this diameter limits the rate of release of a cylinder having a 104.4 bar (1,500 psi) saturation pressure of silane can force through the tube to less than 5,000 sccm (or 5 LPM). Typical end-users require flow rates in the range of about 0.2 to 5 LPM. At the rate of 5 LPM it can take 39 hours for the container to empty. It would take 8.5 hours for a 30 by 30 room with 3.05 m (10 foot) ceilings to reach the silane lower explosive limit level of 1%. Eight and a half hours should provide ample time for alarms to warn personnel to exit and response teams to take necessary action. Therefore, the diameter of the multiple capillaries will ordinarily be less than 126 micrometers.

The length as well as the diameter of the capillary may be adjusted to provide a maximum desired flow rate of 5,000 sccm through the restriction. In the case of silane delivery at the previously mentioned rates, the capillary is typically 6.35 cm long. For that length, it would require two capillaries in parallel with a diameter of about 126 micrometers to provide about the same flow capacity. The multiple capillary passages in the conduit of this invention may be as small as 2 micrometers. However, the size of the capillary passages will usually be set to use not more than eight and not less than two capillary passages to provide numerous passages while still allowing gas release at reasonable flow rates.

A useful feature of this invention is the provision of the essentially round outer cross section of the tube with the relatively uniform internal capillary passages. The internal open flow area through the tube will be defined almost entirely by the regular capillaries, (i.e., those with cross sections in the form of the same regularly recurring shape). The regular capillaries preferably have a round cross section. The roundness of the individual capillary passages may be defined by the variation in diameter, taken along any two lines of direction across the substantially circular cross section of each capillary passage, not exceeding 15%. The uniformity of the different uniform capillary passages may be defined by the variation in average diameter between capillaries not exceeding 15%. Any remaining flow area through the tube is typically in the form of irregular capillary sized passages having individual cross sectional areas that are less than the individual cross sectional areas of the regular capillary passages. Typically, the irregular capillaries will have an average cross-sectional area that equals 50% or less of the average flow area of the regular capillaries. The relatively small diameter of the irregular capillaries minimizes the detrimental effect that the presence of the irregular capillaries may have on the regulation of the flow rate through the restrictor.

The preferred structure of the restrictive flow path is a uniform multi-capillary assembly, where the capillary may be wound for extra strength, or otherwise configured in substantially straight parallel passages. The capillaries may take the form of elongated shafts or rods, and the outer wall of the conduit, as well as the capillaries themselves may be manufactured from any material that is suitably made into such a structure. Thus, the resulting capillary structure has an operating temperature that is limited by the stability or transition temperature of the material defining the capillaries. Capillaries of this size may be made from various glass materials. Drawing techniques used for forming glass fibers and tubes lend themselves most readily to the production of the tube structure of this invention. Suitable glass materials include lead silicate, borosilicate, conventional glasses (soda lime silicate), and other forms of high purity silica such as quartz or fused silica. A particularly preferred glass material is quartz.

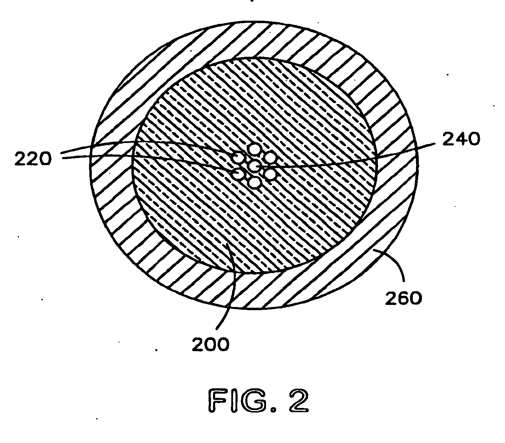

With reference to Fig. 2, the thickness of the glass wall relative to the capillary diameter may be made quite large to overcome the fragility of glass. Proper containment can further overcome any fragility of glass. As shown by the cross-sectional view in Fig. 2, in this embodiment, tube 200 preferably defines a hexagon arrangement of six capillary passages 220 that surround a central capillary passage 240 and wherein all of the capillaries have the same relative diameter.

The tube may be surrounded by an outer sleeve to provide additional support and structural integrity. Such sleeves may be constructed of metallic materials. An optional metal tube 260, typically constructed from stainless steel, may protectively surround the glass tube 200. Metal tube 260 adds further rigidity and durability when optionally shrunk around structure 200 and provides a reinforced unit. With the optional reinforcement of metal tube 260, fracture of the glass tube would again leave the function of the restricted flow path through capillary arrangement 130 substantially unchanged. An especially beneficial arrangement may shrink a metallic sleeve around a glass multi-capillary assembly to compress the tube into the sleeve. An arrangement such as this may provide the needed structural support for imposing the necessary ultra-high pressures that are required to push many fluids through capillaries that approach 126 micrometers in diameter.

The capillary arrangement may be manufactured using a forming method that readily provides the assembly structure of this invention and in particular a uniform multi-capillary assembly. The method forms the multi-capillary tube or conduit with a substantially circular perimeter that surrounds a plurality of regular capillary passages defined by internal walls within an outer wall. The method starts with inserting a plurality of smaller conduits into a surrounding tube to form a tube and conduit assembly. The conduits may be formed by drawing down the tube stock to the desired conduit size. The number of inserted conduits will correspond with the number of regular capillaries obtained by the forming method. Common openings of the conduits are sealed about one end of the tube and conduit assembly to form a drawing stock having a closed end about which all conduits are sealed from fluid flow and an opposite open end about which all conduits are open for fluid flow. The drawing stock is then heated to a softening temperature in a suitable drawing apparatus..

Simultaneously drawing the heated drawing stock while restricting fluid flow from the open conduit ends of the drawing stock reduces the interiors of the conduits to capillary size while preventing collapsing closure of the conduit interiors. A multi-capillary tube that has a number of capillary passages substantially equal to the number of conduits may be recovered from the stretched and cooled drawing stock.
In many cases the reduction of the diameter of the conduits during the drawing of the heated drawing stock provides sufficient reduction in the diameter at their open ends to suitably restrict gas flow out of the interiors of the conduits to a rate that maintains the desired final diameter of the capillary passages formed from the conduits.

In another embodiment of the invention, and with reference back to Fig. 1, upstream of the restrictive flow path 130, a filter unit 132 having a tubular fitting portion that is threaded or otherwise engaged to the restrictive flow path 128, for matable engagement, to remove contaminant particulates. The filter can be any suitable membrane, screen or sintered metal filter, known in the art as a frit filter, which would be resistant to the high pressures within the cylinder.

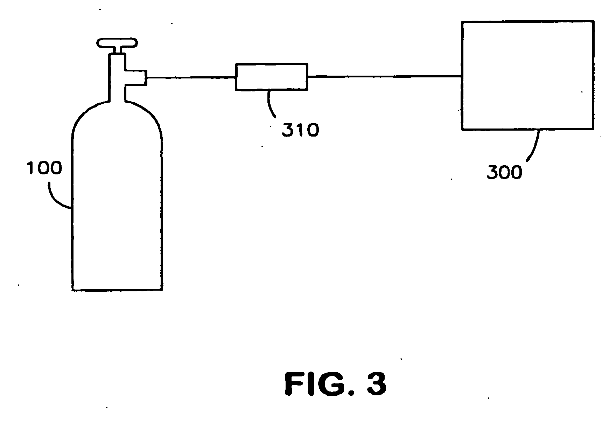

In a further embodiment, and as shown in Fig. 3, the cylinder 100 is in fluid communication with a semiconductor tool, such as a chemical vapor deposition tool 300. Disposed on the line between the cylinder and the tool is a mass flow controller 310, which controls the flow rate of gas delivered to the tool. Generally, the tool requires a flow rate ranging from about 200 to 5,000 sccm. Therefore, it is desirable that the maximum flow rate from cylinder 100 is about 5,000 sccm regardless of whether the flow is to the tool or the outlet is simply exposed to an atmospheric condition.

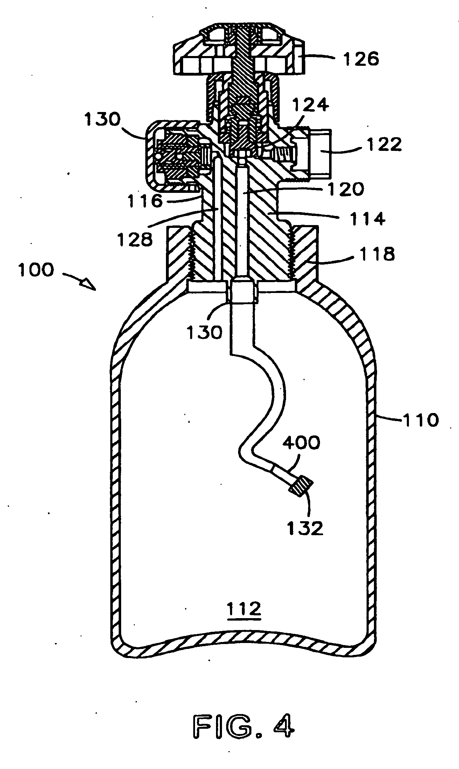

In an alternative embodiment, and as depicted in Fig. 4, capillary arrangement 130 can be used in combination with or replaced by an excess flow valve assembly 400 upstream of the central fluid flow discharge passage 120, or alternatively upstream of the valve 124. The excess flow valve assembly is set to prevent the flow of gas from cylinder 110 once a preset flow rate is exceeded. The preset flow rate is the maximum flow rate of the fluid passing through the device. For example, the excess flow valve may be set to allow delivery of fluid flows from zero up to 5,000 sccm but if for any reason the flow rate through the device were to exceed 5,000 sccm (such as a component failure or leak downstream of the device) the excess flow valve would close and prevent any further release of fluid. In the event of a component failure or leak this device would prevent further escape of gas thereby retaining the remaining fluid inside the cylinder or storage vessel. This feature alone or in combination with the capillary flow restrictor greatly enhances the safety, environmental and health features of the cylinder package. Therefore, upon actuating wheel 126, and opening valve 124, or otherwise sheering off valve head 128, the excess flow valve assembly 400 limits the gas flow rate to approximately zero sccm. Additionally, another excess flow valve 400 could be attached or in communication with the flow path 128 and upstream of valve 130 where in the unlikely event of a complete valve shear the flow of gas through port 128 would also be blocked thereby preventing the escape of fluid from the vessel through either 128 or 120. The operation of the excess flow valve is a mechanical device that senses a differential pressure across the device and stops flow through the device when a preset differential or maximum flow rate is exceeded. Devices of this type are commercially available from The Lee Company, or other manufacturers.

A low release rate package in accordance with the present invention will be further described in detail with reference to the following example, which is, however, not to be construed as limiting the invention.

### EXAMPLE

An apparatus for controlling the discharge of pressurized fluids was prepared. The cylinder contained, inter alia, a gas flow discharge path defined in part by having a capillary passage assembly therein. The cylinder omitted pressure regulators, check valves, and restrictive flow orifices. The cylinder was filled with pressurized silane, and connected to a semiconductor tool such as metalorganic vapor deposition. Likewise, a conventional high pressure silane package without a capillary passage was connected to a semiconductor tool requiring 1,300 sccm. The results are tabulated in Table 1, below.

**Table 1**

| | Apparatus of the Present Invention (68 µm capillaries) | Conventional T size (high pressure cylinder) |
|---|---|---|
| Deliverable Product (kg) | 13.5 | 5.6 |
| Maximum Release Rate (sccm) | 5,000 | 21,460 |
| Deliverable Product (percent of total) | 86.5 | 96.8 |

As can be seen from the results above, the capacity of the cylinder for holding product is increased by a factor of 2.4 to 13.5 kgs, and the deliverable amount of silane is as high as 86.5% (or 11.7 kgs versus 5.4 kgs obtained from the conventional cylinder). In addition, the release rate from the cylinder is limited to 5,000 sccm, while the conventional cylinder has the capability of releasing 21,460 sccm. This four-fold decrease in release rate improves the safety of the package in the event of a downstream leak or component failure and in turn allows for higher fill volumes in each cylinder which correlates to fewer cylinder change-outs.

The capillary packages were prepared to accomplish a maximum delivery 5,000 sccm, based on the requirement of the tool. During normal tool operation the capillaries do not have an intended function other than to provide a flow path through which the fluid from within the vessel travels to the outlet port. However, during an uncontrolled release downstream of the capillaries (such as a component failure) the capillaries limit the maximum flow rate from the cylinder to 5,000 sccm.

Table 2 lists the cylinder heel and usable product based upon the tool flow requirements as delivered from a 15.6 kg silane cylinder.

**Table 2**

| Tool Flow Requirement (sccm) | Cylinder Pressure (minimum cylinder pressure required to maintain desired flow rate, (i.e., check points at various flow rates)) | Cylinder Contents (Heel in Kg.) | Usable Capacity |
|---|---|---|---|
| 200 | 59 | 0.3 | 15.3 |
| 500 | 149 | 0.8 | 14.8 |
| 1,000 | 297 | 1.6 | 14.0 |
| 1,300 | 386 | 2.1 | 13.5 |
| 2,500 | 743 | 5.2 | 10.4 |
| 5, 000 | 1, 486 | 15.5 | 0.1 |

As noted from the table, lower tool flow rates will result in higher product utilization rates of product from the cylinder used for this example.

## Claims

1. An apparatus (100) for controlling the discharge of pressurized fluids from the outlet of a high pressure cylinder (110) containing toxic hydridic/halidic or flammable compounds, the apparatus (100) comprising:
a cylinder (110) for holding a pressurized fluid in an at least partial gas phase,
a cylinder port body (114) threaded to the upper part of the cylinder (110) in a sealed position;
a dual port valve head assembly (116) disposed within the cylinder port body (114), wherein a first port (130) is utilized to fill the cylinder (110) with a pressurized fluid, and a second port in fluid communication with an outlet (122) of the cylinder (110) is utilized to discharge the pressurized fluid;
a gas flow discharge path (120) defined in part by the second port body and the outlet, and further including a restricted flow path (130, 400) and a flow channel disposed upstream of the second port body, but wherein the gas flow discharge path (120) does not include a restrictive element selected from the group of pressure regulators, check valves and restrictive flow orifices; and
a shut-off valve (124) for controlling fluid flow along the gas discharge path (120);
**characterized in that**
the restricted flow path (130, 400) limits the flow rate of the gas discharged from the cylinder (110) to a maximum of not more than 5,000 sccm when the outlet (122) of the cylinder (110) is exposed to an atmospheric condition and comprises a conduit (200) having at least two capillary passages (220, 240) and/or an excess flow valve (400) for sensing the differential pressure across the valve and for stopping flow through the valve when a predefined maximum flow rate is exceeded, said conduit (200) and said excess flow valve (400), respectively, being located upstream of the shut-off valve (124).

2. The apparatus of claim 1, wherein the capillary passages (220,240) have a diameter of about 126 µm (microns) or less.

3. The apparatus of claim 1, wherein the conduit (200) surrounds a plurality of elongated shaft (220, 240) to define a restricted flow path.

4. The apparatus of claim 3, wherein the capillary passages (220,240) comprise straight tubes, and have an arrangement of one central tube (240) surrounded by at least two outer tubes (220) to provide capillary size flow areas through the tubes.

5. The apparatus of claim 1, further comprising a mass flow controller (310) disposed downstream of the cylinder outlet (122) and fluidly connected to a semiconductor manufacturing tool (300), wherein the mass flow rate from the cylinder (110) to the tool (300) ranges from about 200 to about 5,000 sccm

6. The apparatus of claim 1, wherein the capillary passage (220, 240) are disposed above the liquid fluid in the cylinder (110).

7. The apparatus of claim 1, further comprising a sintered metal frit filter (132) upstream of the restricted flow path (130, 400).

8. The apparatus of claim 1, wherein the flow channel is disposed downstream of the restricted flow path (130, 400) and in communication with the second port.

9. The apparatus of claim 1, wherein the shut-off valve (124) is selected from the group consisting of manual, pneumatic, or electrically operated valves.

10. The apparatus of claim 1 wherein the fill port flow path (128) comprises an excess flow valve that isolates flow through the fill port in the event that the preset flow rate is exceeded.

## Patentansprüche

1. Vorrichtung (100) zum Steuern der Ausgabe von unter Druck stehenden Fluiden aus dem Auslass eines Hochdruckzylinders (110), der toxische Hydrid-/HalogenVerbindungen oder entflammbare Verbindungen enthält, mit:
einem Zylinder (110) zum Halten eines unter Druck stehenden Fluids in einer mindestens teilweisen Gasphase,
einem Zylinderanschlusskörper (114), der auf den oberen Teil des Zylinders (110) in einer dichtenden Position aufgeschraubt ist;
einer Doppelanschlussventilkopfbaugruppe (116), die innerhalb des Zylinderanschlusskörpers (114) angeordnet ist, wobei ein erster Anschluss (130) verwendet wird, um den Zylinder (110) mit einem unter Druck stehendem Fluid zu füllen, und ein zweiter Anschluss in Fluidverbindung mit einem Auslass (122) des Zylinders (110) verwendet wird, um das unter Druck stehende Fluid auszugeben;
einem Gasströmungsausgabeweg (120), der zum Teil durch den zweiten Anschlusskörper und den Auslass festgelegt wird und ferner einen beschränkten Strömungsweg (130, 400) und einen stromauf des zweiten Anschlusskörpers angeordneten Strömungskanal aufweist, wobei jedoch der Gaströmungsausgabeweg (120) kein beschränkendes Element aufweist, das aus der aus Druckreglern, Rückschlagventilen und Strömungsbegrenzungsöffnungen bestehenden Gruppe ausgewählt ist; und
einem Absperrventil (124) zum Steuern des Fluidstroms entlang des Gasausgabewegs (120);
**dadurch gekennzeichnet, dass**
der beschränkte Strömungsweg (130, 400) die Durchflussrate des aus dem Zylinder (110) ausgegebenen Gases auf ein Maximum von nicht mehr als 5.000 Standald-cm³ begrenzt, wenn der Auslass (122) des Zylinders (110) Atmosphärenbedingungen ausgesetzt ist, und eine Leitung (200) aufweist, die mindestens zwei Kapillardurchlässe (220, 240) und/oder ein Überstromventil (400) zum Erfassen der Druckdifferenz über das Ventil und zum Beenden des Stroms durch das Ventil, wenn eine vorbestimmte maximale Strömungsrate überschritten wird, aufweist, wobei die Leitung (200) bzw. das Überstromventil (400) stromauf des Absperrventils (124) angeordnet ist.

2. Vorrichtung gemäß Anspruch 1, wobei die Kapillardurchlässe (220, 240) einen Durchmesser von etwa 126 µm oder weniger aufweisen.

3. Vorrichtung gemäß Anspruch 1, wobei die Leitung (200) eine Mehrzahl von langgestreckten Stäben (220, 240) umgibt, um einen beschränkten Strömungsweg festzulegen.

4. Vorrichtung gemäß Anspruch 3, wobei die Kapillardurchlässe (220, 240) gerade Röhren sowie eine Anordnung einer zentralen Röhre (240) aufweisen, die von mindestens zwei äußeren Röhren (220) umgeben ist, um Strömungsbereiche mit Kapillargröße durch die Röhren hindurch zu bilden.

5. Vorrichtung gemäß Anspruch 1, ferner versehen mit einem Massendurchsatzsteuergerät (310), welches stromab des Zylinderauslasses (122) angeordnet ist und in Fluidverbindung mit einem Halbleiterherstellungsgerät (300) steht, wobei der Massendurchsatz von dem Zylinder (110) zu dem Gerät (300) im Bereich von etwa 200 bis etwa 5.000 Standard-cm³ liegt.

6. Vorrichtung gemäß Anspruch 1, wobei die Kapillardurchlässe (220, 240) oberhalb des flüssigen Fluids in dem Zylinder (110) angeordnet sind.

7. Vorrichtung gemäß Anspruch 1, ferner versehen mit einem gesinterten Metallfrittefilter (132) stromauf des beschränkten Strömungswegs (130, 400).

8. Vorrichtung gemäß Anspruch 1, wobei der Strömungskanal stromab des beschränkten Strömungswegs (130, 400) und in Verbindung mit dem zweiten Anschluss angeordnet ist.

9. Vorrichtung gemäß Anspruch 1, wobei das Absperrventil (124) aus der aus manuell betätigten Ventilen, pneumatisch betätigten Ventilen oder elektrisch betätigten Ventilen bestehenden Gruppe ausgewählt ist.

10. Vorrichtung gemäß Anspruch 1, wobei der Füllanschlussströmungsweg (128) ein Überstromventil aufweist, welches den Strom durch den Füllanschluss isoliert, falls die voreingestellte Durchflussrate überschritten wird.

## Revendications

1. Appareil (100) destiné à commander la décharge de fluides sous pression à la sortie d'une bouteille à haute pression (110) contenant des composés hydrogénés/halogénés toxiques ou inflammables, l'appareil (100) comprenant :
une bouteille (110) destinée à contenir un fluide sous pression, au moins partiellement en phase gazeuse ;
un corps de robinet de bouteille (114) vissé sur la partie supérieure de la bouteille (110) dans une position de fermeture ;
un ensemble de tête de soupape à double port (116) disposé dans le corps de robinet de bouteille (114), un premier port (130) étant utilisé pour remplir la bouteille (110) d'un fluide sous pression et un second port en communication fluidique avec une sortie (122) de la bouteille (110) étant utilisé pour décharger le fluide sous pression ;
un trajet de décharge du flux de gaz (120) défini en partie par le corps du second port et la sortie et comprenant en outre un trajet à écoulement réduit (130, 400) et un canal d'écoulement situé en amont du corps du second port, le trajet de décharge du flux de gaz (120) ne comprenant pas un élément de restriction choisi dans le groupe composé des régulateurs de pression, des clapets de retenue et des orifices à écoulement restreint ; et
une vanne de coupure (124) destinée à commander le flux de fluide sur le trajet de décharge du flux de gaz (120),
**caractérisé en ce que**
le trajet à écoulement réduit (130, 400) limite le débit du gaz déchargé par la bouteille (110) à un maximum de 5 000 centimètres cubes normalisés par minute (sccm pour « *standard cubic centimeter per minute* ») lorsque la sortie (122) de la bouteille (110) est exposée à la pression atmosphérique et comprend une conduite (200) comprenant au moins deux passages capillaires (220, 240) et/ou une vanne de débit excessif (400) destinée à détecter la pression différentielle de la vanne et à arrêter le flux traversant la vanne lorsqu'un débit maximal prédéterminé est dépassé, ladite conduite (200) et ladite vanne de débit excessif (400), respectivement, étant situées en amont de la vanne de coupure (124).

2. Appareil selon la revendication 1, dans lequel les passages capillaires (220, 240) ont un diamètre d'environ 126 µm (microns) ou moins.

3. Appareil selon la revendication 1, dans lequel la conduite (200) entoure une pluralité de tiges allongées (220, 240) pour définir un trajet à écoulement réduit.

4. Appareil selon la revendication 3, dans lequel les passages capillaires (220, 240) comprennent des tubes rectilignes et sont disposés dans un agencement comprenant un tube central (240) entouré d'au moins deux tubes extérieurs (220) pour fournir des aires d'écoulement capillaire dans les tubes.

5. Appareil selon la revendication 1, comprenant en outre un contrôleur de flux massique (310) disposé en aval de la sortie de la bouteille (122) et connecté fluidiquement à un outil de fabrication de semiconducteurs (300), le débit massique entre la bouteille (110) et l'outil (300) allant d'environ 200 à environ 5 000 sccm.

6. Appareil selon la revendication 1, dans lequel les passages capillaires (220, 240) sont disposés au-dessus du fluide liquide dans la bouteille (110).

7. Appareil selon la revendication 1, comprenant en outre un filtre en métal fritté (132) en amont du trajet à écoulement réduit (130, 400).

8. Appareil selon la revendication 1, dans lequel le canal d'écoulement est situé en aval du trajet à écoulement réduit (130, 400) et est en communication avec le second port.

9. Appareil selon la revendication 1, dans lequel la vanne de coupure (124) est sélectionnée dans le groupe composé des vannes à commande manuelle, pneumatique ou électrique.

10. Appareil selon la revendication 1, dans lequel le trajet du port de remplissage (128) comprend une vanne de débit excessif qui coupe le flux traversant le port de remplissage lorsque le débit prédéterminé est dépassé.
